# EUROPÄISCHE PATENTSCHRIFT

(11) **EP 0 776 729 B1**
(45) Veröffentlichungstag und Bekanntmachung des Hinweises auf die Patenterteilung: **27.09.2000**
(21) Anmeldenummer: 97102113.4
(22) Anmeldetag: 14.01.1995
(51) Int. Cl.: B23Q 15/013, B27B 31/00

(54) **Abbundanlage mit Vorschubeinrichtung für einen Balken**
Trimming-machine with feeding device for a beam
Machine de taillage avec dispositif d'avancement pour une poutre

(30) Priorität: 18.01.1994 DE 4401271
(43) Veröffentlichungstag der Anmeldung: 04.06.1997
(62) Teilanmeldung aus: 95100468.8
(73) Patentinhaber: SCHMIDLER MASCHINENBAU GmbH, 91180 Heideck (DE)
(72) Erfinder: Schmidler, Hans, 91180 Heideck (DE); Schmidler, Richard, 91180 Heideck (DE)

(56) Entgegenhaltungen:
- DE-C- 3 420 080
- DE-U- 9 214 929

## Beschreibung

Die Erfindung betrifft eine Abbundanlage mit Vorschubeinrichtung gemäß dem Oberbegriff des Anspruches 1.

Von den seit langem am Markt eingeführten BURMEK-Transferstationen zur Bearbeitung von Riegelwerken etwa für den Fertigausbau ist es branchenbekannt, die flach auf Rollenbahnen ruhenden Holzkonstruktionen dadurch für definierten Vorschub zu greifen, daß von zwei einander gegenüberliegenden Seiten her Stempel quer zur Vorschubrichtung aufeinander zu bewegt werden, die an Laufkatzen oder ähnlichen Schlepporganen gehaltert sind. Für eine formschlüssige Vorschub-Kopplung dringen dabei vor den Stempeln angeordnete, zugespitzte Stangen (sogenannte Dorne) ins dazwischen eingeklemmte Holz ein. Es war an sich naheliegend, genau diesen vertrauten Formschluß (also mittels eines ins Holz eindringenden Dornes) auch dann anzuwenden, wenn es sich bei dem Werkstück nicht um ein flächig-liegendes Fachwerkgebilde handelt, sondern um einen relativ langen Balken, der z.B. auf einer Abbundanlage im Taktvorschub an aufeinanderfolgende Bearbeitungsstationen zu überführen ist, um für den zimmermannsmäßigen Dachstuhlbau profiliert zu werden. Weil dabei der Balken auf seinem Vorschubbett ruht, braucht für den Vorschub in Balken-Längsrichtung natürlich nur ein einziger Dorn von oben in den Balken eingestochen zu werden. Allerdings ist insbesondere bei feuchtem und weichem Holz und bei schnellen, langen Vorschubbewegungen nicht auszuschließen, daß das Einstich-Loch im Holz sich in Vorschubrichtung aufweitet; mit der Folge, daß trotz formschlüssigen Vorschub-Eingriffes die tatsächliche Bewegung des Balkens um einen gewissen Schlupf hinter dem von der zentralen Steuerung vorgegebenen Vorschub des Schlepporganes zurückbleibt. Die Folge ist Ausschußproduktion, da die Stirnprofilierung bzw. die Länge des bearbeiteten Balkens schließlich nicht den aus den CAD-Konstruktionszeichnungen koordinatenmäßig übernommenen Fertigungsvorgaben entspricht.

Die vorbeschriebene formschlüssige Ankopplung mittels wenigstens eines in das Holz einzutreibenden Dornes ist dann wieder Gegenstand der DE 34 20 080 C1. Darin wird auch beschrieben, wie der zu Ankupplungszwecken dienende Dorn, für den Transport eines Balkens in die nächstfolgende Sollposition, mittels eines Transportschlittens in Balken-Längsrichtung verfahren wird. Für diese Bewegung kämmt ein schlittenfestes Antriebsritzel mit einer in Transportrichtung sich erstreckenden Zahnstange. Die anzufahrende Position könnte deshalb durch die Umdrehungszahl des formschlüssig in die Zahnstange eingreifenden Antriebsritzels vorgegeben sein; stattdessen ist dort aber am Transportschlitten ein gesonderter Ist-Wegmesser montiert, der mit dem Ritzel seines Meßrades formschlüssig in eben diese Transport-Zahnstange eingreift. So kann aber nur der Verfahrweg des Schlittens selbst erfaßt werden, nicht der tatsächliche Transportweg des Balkens, der aufgrund der zuvor beschriebenen Erscheinungen durchaus hinter dem Verfahrweg des Schlittens zurück bleiben kann.

Diese Gefahr ist desto größer, wenn zur Schonung der Balken-Oberfläche auf das Einstechen eines Vorschub-Dornes verzichtet werden soll. Dann erfolgt die Vorschub-Kopplung - wie in dem eigenen Gebrauchsmuster DE 92 14 929.4 U1 näher beschrieben - über den Andruck eines Schleppschuhes, der gegebenenfalls mit einem Haftpolster unter einer austauschbaren Andrucksohle bestückt ist. Während bei trockener und sauberer Oberfläche der so erzielbare, die Balkenoberfläche schonende Reib- oder Haftschluß für einen praktisch schlupffreien Vorschubweg ausreicht, kann zum Vorschub von Balken mit verschmutzten, feuchten oder gar überfrorenen Oberflächen der Schleppschuh mit einer grob gerastert profilierten Andrucksohle bestückt werden, um das Entstehen ausreichenden Reibschlusses zu fördern. Die kegelig oder prismatisch vorstehenden Noppen der gerasterten Andrucksohle durchstoßen - unter Vermeidung von Formschluß, also ohne wesentliche Beeinträchtigung der Balken-Oberfläche - einen solchen zu Schlupf neigenden Belag und sorgen so für gute kraft- also haftschlüssige Kopplung. Jedoch bleibt grundsätzlich die Gefahr bestehen, daß die Balkenbewegung im Ergebnis doch schlupfbedingt unreproduzierbar hinter dem Vorschub des Schlepporganes zurückbleibt, wie genau auch dessen Weg etwa mittels eines formschlüssig abgreifenden Wegmessers nach DE 34 20 080 C1 erfaßt wird.

Der Erfindung liegt deshalb die Aufgabe zugrunde, solchen schlupfbedingten Ausschuß bei der Profilierung von Balken möglichst zu vermeiden.

Diese Aufgabe ist nach der Erfindung dadurch gelöst, daß die Vorschubeinrichtung auch die Merkmale gemäß dem Kennzeichnungsteil des Hauptanspruches aufweist. Zu weiteren Ausbildungen wird auf die Unteransprüche und die nachfolgende Zeichnungsbeschreibung verwiesen.

Danach ist in der Nähe des Schleppschuh ein, vorzugsweise direkt auf der Balkenoberfläche abrollender, Wegmesser vorgesehen. Der mißt, um welche Strecke der in Längsrichtung vorbewegte Balken sich gegenüber dem Schlepporgan verschiebt, wenn Schlupf auftritt. Dieser Vorschubfehler kann dann wieder kompensiert werden, indem die beispielsweise speicherprogrammierte Zentral-Steuerung ihre originäre Vorschub-Vorgabe um genau diesen Fehlweg vergrößert. Dadurch gelangt der Balken schließlich doch mit der vorgegebenen Absolutlage in die Bearbeitungsstation, ehe diese von der zentralen Steuerung in Funktion gesetzt wird.

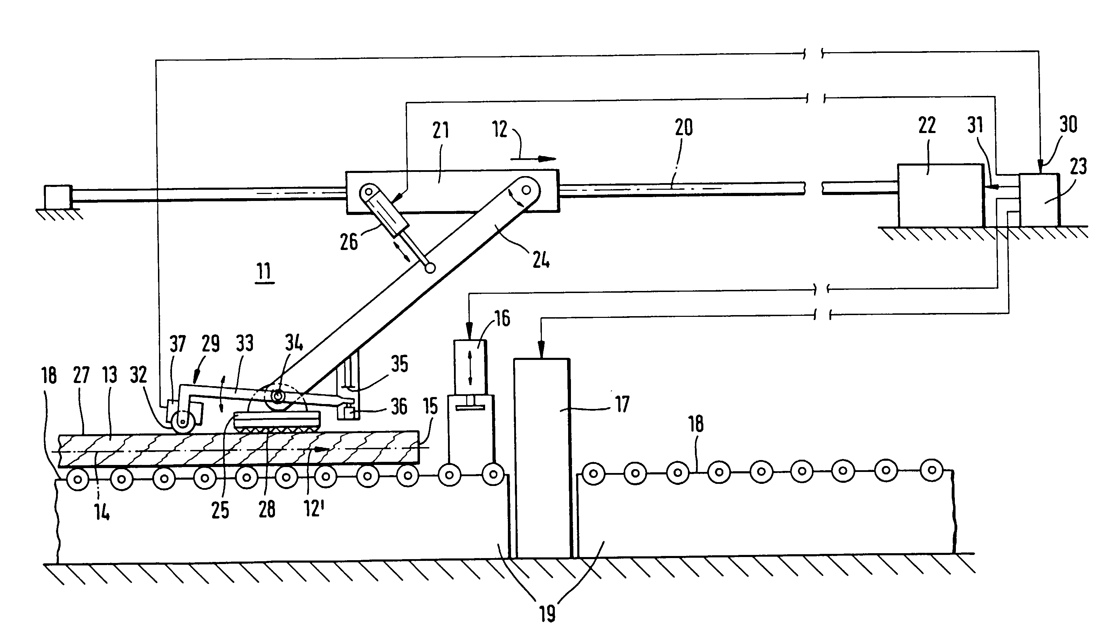

Die Erfindung einschließlich vorteilhafter Weiterbildungen wird nachstehend anhand eines bevorzugten Ausführungsbeispieles näher erläutert. Die einzige Figur der Zeichnung veranschaulicht in stark abstrahierter und nicht ganz maßstabsgerechter Darstellung eine erfindungsgemäße kraftschlüssige Balken-Vorschubeinrichtung mit Schlupfkorrektur an einer in abgebrochener Seitenansicht angedeuteten Abbundanlage.

Die dargestellte Vorschubeinrichtung 11 dient dem Vorschub 12 eines (Holz-) Balken 13 um eine definierte Strecke in Richtung seiner Längsachse 14 in eine Position, in welcher dessen Stirnende 15 mittels wenigstens einer Spanneinrichtung 16 bezüglich einer Bearbeitungsstation 17 definiert festgelegt werden soll, um in vorgegebener Weise z.B. von einer Schwenk-Kapp-Säge, einer Bohreinheit oder einem Fräskopf bearbeitet zu werden. Die Längsbewegung des Balken 13 erfolgt auf einer Auflage- und Führungseinrichtung 18. Bei der kann es sich um einen spurgeführten Wagen, ein Transportband oder einfach wie dargestellt um eine Rollenbahn auf dem Maschinengestell 19 einer Abbundanlage handeln.

Ortsfest und parallel bezüglich der Führungseinrichtung 18 verläuft die Führungsbahn 20 für ein Schlepporgan 21. Das kann etwa als gezogener Schlitten, als Laufkatze mit Eigenantrieb oder als Schubmutter auf einer Spindel ausgebildet sein. Das Schlepporgan 21 wird jedenfalls von seinem Antrieb 22 nach Maßgabe einer Vorgabe aus einer programmierten elektronischen Steuerung 23 um den Vorschub 12 weiterbewegt. Um den Balken 13 aus einer definierten Anfangsstellung heraus (links jenseits der Zeichnung) um den gleichen Weg 12' vorzubewegen, ist das Schlepporgan 21 über einen hier einarmig dargestellten Andruck-Hebel 24 mit einem, wie skizziert bevorzugt verschwenkbar angelenkten, Schleppschuh 25 ausgestattet. Der kann über den Hebel 24 mittels eines Kolben 26 auf die, von der Führungseinrichtung 18 abgewandte, Oberfläche 27 des Balken 13 aufgepreßt bzw. davon wieder abgehoben werden. Bei roh bearbeitetem Holz, bei dem es auf Eingriffe in die Oberfläche 27 nicht ankommt, kann mit dem Aufpressen des Schleppschuh 25 ein darunter befindlicher Dorn in den Balken 13 eingestochen werden, um für den definierten Längstransport mittels des Schlepporgan 21 eine formschlüssige Verbindung herzustellen. Bei weichem Holz kann der Einstich des Dornes aber ausreißen, so daß der Weg 12' des Balken 13 um einen gewissen, zufallsbedingten Schlupf kürzer ist als der Vorschub 12 des Schlepporgan 21. Für den Vorschub von Balken 13, deren Oberfläche 27 keine so gravierenden Oberflächenverletzungen aufweisen dürfen, wird statt des Dornes unter den Schleppschuh 25 zweckmäßiger eine den Gegebenheiten angepaßte Andrucksohle 28 montiert. Bei der handelt es sich bevorzugt um eine Leichtmetall-Spritzgußplatte, die auf der ihrer Montagefläche gegenüberliegenden freien Oberfläche mit einer Anzahl angeformter stumpfer Kegel oder Prismen ausgestattet ist, wie in der Zeichnung skizziert. Diese drücken auch durch eine Verschmutzung (z.B. von Schlamm, Sägemehl oder Hobelspänen) oder durch eine Oberflächen-Vereisung hindurch, aber dann nur leicht in die Oberfläche 27 des Balken 13 ein, und erbringen so eine recht zuverlässige kraft- und formschlüssige Verbindung zum Schlepporgan 21. Ein Vorschub-Schlupf ist aber auch hierbei nicht grundsätzlich auszuschließen.

Bei trockenem Holz mit bereits feinbearbeiteter Oberfläche 27 ist eine reine Haftreibungs-Mitnahme zu bevorzugen, wofür ein eine Andrucksohle 28 mit Gummi- oder Kunststoff-Polster von griffiger Oberfläche unter den Schleppschuh 25 montiert wird. Insbesondere bei längeren Wegen über mehrere aufeinanderfolgende Bearbeitungsstationen 17 ist auch hier ein Schlupf gegenüber dem aus der Steuerung 23 vorgegebenen Vorschub 12 nicht auszuschließen - mit der Folge, daß wieder die am Stirnende 15 ausgearbeitete Geometrie nicht der Vorgabe entspricht bzw nur an einem Balken 13 mit letztlich fehlerhafter Länge erzeugt wird.

Um dem dadurch eintretenden Ausschuß entgegenzuwirken, ist nun zwischen dem Schlepporgan 21 und der Oberfläche 27 des Balken 13 ein Wegmesser 29 vorgesehen. Der liefert bei einer Relativbewegung zwischen Schleppschuh 25 und Balken 13 eine Schlupfinformation 30 an die übergeordnete Steuerung 23. Dadurch wird diese veranlaßt, ihre Vorschubvorgabe 31 um den Betrag der Abweichung des tatsächlich erreichten Balken-Weges 12' vom Vorschub 12 des Schlepporgan 21 zu vergrößern, letzteres also noch entsprechend weiter zu bewegen, so daß letztlich die Lage des Stirnende 15 des Balken 13 in der Bearbeitungsstation 17 wieder die ursprüngliche Steuerungsvorgabe erfüllt.

Der Wegmesser 29 kann einfach als Inkremental-Drehwinkelgeber, mit z.B. einem induktiv erfaßten Nockenrad oder einer optronisch abgetastenten Speichenscheibe, ausgeführt sein, der von einem über der Oberfläche 27 des Balken 13 abrollenden mehr oder weniger breiten Walze 32 angetrieben wird, wenn und insoweit die Längsbewegung des Balken 13 schlupfbedingt hinter derjenigen des Schlepporgan 21 zurückbleibt. Ein Lagerhebel 33 für die Halterung der Walze 32 liegt z.B. bei abgehobenem Schleppschuh 25 schwerkraftbedingt oder unterstützt durch eine Andruckfeder 34 gegen einen Anschlag 35. Mit dem Absenken der Andruckplatte 25 stützt sich zunächst die Walze 32 der Federkraft entgegen auf der Balken-Oberfläche 27 ab. Mit dem Verschwenken des Lagerhebel 33 wird dabei ein Resetschalter 36 für den Inkremental-Zähler 37 aktiviert, um zu Beginn des folgenden Fördervorganges, wenn noch kein Versatz zwischen Vorschub 12 und tatsächlich ausgeführtem Weg 12' aufgetreten sein kann, die Schlupfinformation 30 für die nun beginnende Kontrollmessung zurückzusetzen. So ist selbst bei nicht vorhersagbarer, schlupfbehafteter Relativbewegung des Schlepporgan 21 gegenüber dem zu bearbeitenden Balken 13 sichergestellt, daß dessen Stirnende 15 auch tatsächlich die beabsichtigte Vorschubvorgabe 31 erfüllt hat, ehe in der nächsten Bearbeitungsstation 17 das Werkzeug wirksam wird.

Zum definierten Balken-Vorschub können also schlupfbedingte Bewegungsfehler des Balkens 12 relativ zu seiner Transport- oder Vorschubeinrichtung 11 gleich kompensiert werden, indem die zentrale Steuerung 23 für die Antriebs-Motore 22 von Schlupfweg-Messern 29 aktuelle Meßwerte über die Relativbewegung zwischen der Balken-Oberfläche 27 und dem Anlage-Schleppschuh 25 erhält.

## Patentansprüche

1. Abbundanlage mit Vorschubeinrichtung (11) mit Schlepporgan (21) und Antrieb (22) für einen auf einer Führungseinrichtung (18) um einen definierten Vorschub (12) zu bewegenden Balken (13), gegen den ein Mitnehmer quer zur Vorschubrichtung angreift, dadurch gekennzeichnet,
daß ein Wegmesser (29) zwischen Schlepporgan (21) und Balken (13) vorgesehen ist.

2. Vorschubeinrichtung nach Anspruch 1, dadurch gekennzeichnet,
daß der Wegmesser (29) eine Walze (32) zum Antrieb eines Inkremental-Zähler (37) aufweist.

3. Vorschubeinrichtung nach einem der vorangehenden Ansprüche, dadurch gekennzeichnet,
daß der Wegmesser (29) mittels eines Hebel (24) für die Anlage eines Schleppschuh (25) gegen die Oberfläche (27) des Balken (13) mit dem Balken (13) gekoppelt wird.

4. Vorschubeinrichtung nach einem der vorangehenden Ansprüche, dadurch gekennzeichnet,
daß der Wegmesser (29) mittels einer Andruckfeder (34) gegen die Oberfläche (27) des Balken (13) angelegt wird.

5. Vorschubeinrichtung nach einem der vorangehenden Ansprüche, dadurch gekennzeichnet,
daß der Wegmesser (29) beim Absetzen auf den Balken (13) rücksetzbar ist.

6. Vorschubeinrichtung nach einem der vorangehenden Ansprüche, dadurch gekennzeichnet,
daß der Wegmesser (29) eine Schlupfinformation (30) zur entsprechenden Vergrößerung der Vorschubvorgabe (31) an eine zentrale Ablauf-Steuerung (32) überträgt.

7. Vorschubeinrichtung nach einem der vorangehenden Ansprüche, dadurch gekennzeichnet,
daß der Wegmesser (29) an einem Hebel (24) zum Anlegen eines Schleppschuh (25) gegen den Balken (13) gehaltert ist, der mit wenigstens einem Eingriffsdorn ausgestattet ist.

8. Vorschubeinrichtung nach einem der Ansprüche 1 bis 6, dadurch gekennzeichnet,
daß der Wegmesser (29) an einem Hebel (24) zum Anlegen eines Schleppschuh (25) gegen den Balken (13) gehaltert ist, der mit einer grob strukturiert profilierten Andrucksohle (28) ausgestattet ist.

9. Vorschubeinrichtung nach einem der Ansprüche 1 bis 6, dadurch gekennzeichnet,
daß der Wegmesser (29) an einem Hebel (24) zum Anlegen eines Schleppschuh (25) gegen den Balken (13) gehaltert ist, der mit einer oberflächengriffigen Andrucksohle (28) ausgestattet ist.

## Claims

1. A timber-joining installation having an advance apparatus (11) with a drag member (21) and a drive (22) for a beam (13) which is to be moved on a guide arrangement (18) by a defined advance movement (12) and against which an entrainment member acts transversely with respect to the advance direction, characterised n that there is provided a travel measuring device (29) between the drag member (21) and the beam (13).

2. An advance apparatus according to claim 1 characterised in that the travel measuring device 29) has a roller (32) for driving an incremental counter (37).

3. An advance apparatus according to one of the preceding claims characterised in that the travel measuring device (29) is coupled to the beam (13) by means of a ever (24) for contact of a drag shoe (25) against the surface (27) of the beam (13).

4. An advance apparatus according to one of the preceding claims characterised in that the travel measuring device (29) is applied against the surface (27) of the beam (13) by means of a pressure spring (34).

5. An advance apparatus according to one of the preceding claims characterised in that the travel measuring device (29) is resettable when it is set down on to the beam (13).

6. An advance apparatus according to one of the preceding claims characterised in that the travel measuring device (29) transmits an item of slippage information (30) to a central procedural control system (32), for correspondingly increasing the preset advance parameter (31).

7. An advance apparatus according to one of the preceding claims characterised in that the travel measuring device (29) is mounted to a lever (24) for applying a drag shoe (25) against the beam (13), which is provided with at least one engagement spike.

8. An advance apparatus according to one of claims 1 to 6 characterised in that the travel measuring device (29) is mounted to a lever (24) for applying a drag shoe (25) against the beam (13), which is provided with a contact pressure sole (28) of a coarsely structured profiled configuration.

9. An advance apparatus according to one of claims 1 to 6 characterised in that the travel measuring device (29) is mounted to a lever (24) for applying a drag shoe (25) against the beam (13), which is provided with a contact pressure sole (28) having a grippy surface.

## Revendications

1. Centre d'usinage de charpentes comportant un dispositif d'avance (11) avec organe de remorquage (21) et dispositif d'entraînement (22) pour une poutre (13) à déplacer d'une avance (12) définie sur un dispositif de guidage (18), contre laquelle un entraîneur agit transversalement à la direction d'avance, caractérisée en ce qu'un dispositif de mesure de distance (29) est prévu entre l'organe de remorquage (21) et la poutre (13).

2. Dispositif d'avance selon la revendication 1, caractérisé en ce que le dispositif de mesure de distance (29) comporte un rouleau (32) pour l'entraînement d'un compteur incrémentiel (37).

3. Dispositif d'avance selon l'une des revendications précédentes, caractérisé en ce que le dispositif de mesure de distance (29) est accouplé à la poutre (13), au moyen d'un levier (24), pour l'application d'un sabot de remorquage (25) contre la surface (27) de la poutre (13).

4. Dispositif d'avance selon l'une des revendications précédentes, caractérisé en ce que le dispositif de mesure de distance (29) est appliqué contre la surface (27) de la poutre (13), au moyen d'un ressort de pression (34).

5. Dispositif d'avance selon l'une des revendications précédentes, caractérisé en ce que le dispositif de mesure de distance (29) peut être réinitialisé lorsqu'il est déposé sur la poutre (13).

6. Dispositif d'avance selon l'une des revendications précédentes, caractérisé en ce que le dispositif de mesure de distance (29) transmet une information de glissement (30) à une commande de déroulement (32) centrale, en vue de l'augmentation correspondante de la consigne d'avance (31).

7. Dispositif d'avance selon l'une des revendications précédentes, caractérisé en ce que le dispositif de mesure de distance (29) est maintenu sur un levier (24) pour l'application d'un sabot de remorquage (25) contre la poutre (13) qui est équipée d'au moins un mandrin de prise.

8. Dispositif d'avance selon l'une des revendications 1 à 6, caractérisé en ce que le dispositif de mesure de distance (29) est maintenu contre un levier (24) pour l'application d'un sabot de remorquage (25) contre la poutre (13) qui est équipée d'une semelle de pression (28) profilée avec une structure grossière.

9. Dispositif d'avance selon l'une des revendications 1 à 6, caractérisé en ce que le dispositif de mesure de distance (29) est maintenu contre un levier (24) pour l'application d'un sabot de remorquage (25) contre la poutre (13) qui est équipée d'une semelle de pression (28) à surface adhérente.
